# EUROPEAN PATENT SPECIFICATION

(11) **EP 2 045 214 B1**
(45) Date of publication and mention of the grant of the patent: **27.04.2011**
(21) Application number: 08105460.3
(22) Date of filing: 29.09.2008
(51) Int. Cl.: C01B 33/40

(54) **Gold nanoparticle-halloysite nanotube and method of forming the same**
Goldnanoteilchen-Halloysit-Nanorohr und Erzeugungsverfahren dafür
Nanotube de nanoparticule-halloysite d'or et son procédé de formation

(30) Priority: 04.10.2007 KR 20070099960
(43) Date of publication of application: 08.04.2009
(73) Proprietor: Gwangju Institute of Science and Technology, Buk-gu, Gwangju 500-712 (KR)
(72) Inventor: Geckeler, Kurt E., 500-712 Buk-gu, Gwangju (KR); Shamsi, Mohtashim Hassan, 500-712 Buk-gu, Gwangju (KR)
(74) Representative: Capasso, Olga

(56) References cited:
- US-A- 5 808 136
- PRATI L ET AL: "Gold on Carbon as a New Catalyst for Selective Liquid Phase Oxidation of Diols" JOURNAL OF CATALYSIS, ACADEMIC PRESS, DULUTH, MN, US, vol. 176, no. 2, 10 June 1998 (1998-06-10), pages 552-560, XP004447366 ISSN: 0021-9517
- FU ET AL: "Simultaneous deposition of Ni nanoparticles and wires on a tubular halloysite template: A novel metallized ceramic microstructure" JOURNAL OF SOLID STATE CHEMISTRY, ORLANDO, FL, US, vol. 178, no. 11, 1 November 2005 (2005-11-01), pages 3595-3600, XP005153489 ISSN: 0022-4596
- XUE ET AL: "Growth of Pd, Pt, Ag and Au nanoparticles on carbon nanotubes" JOURNAL OF MATERIALS CHEMISTRY, vol. 11, no. 9, 2001, pages 2378-2381, XP002532125

## Description

### Technical Field

The present invention relates to a cermet that is a metal-ceramic compound, and more particularly, to a aluminosilicate clay nanotube in which gold nanoparticles are densely distributed.

### Background Art

Metal nanoparticles has physically and chemically different characteristics from other compositions because they have the very small size and the special structural characteristic. For example, the metal nanoparticles are mostly applied to catalysts, engineering devices, electronic devices, biomedical materials and the like.

In particular, the gold nanoparticles are currently widely studied. The gold nanoparticles are applied to various fields such as a curing agent, a biosensor, a catalyst, and a carrier in respects to a visual molecular sensor. In addition, in the case of when the gold nanoparticles are dispersed in an aqueous solution, the gold nanoparticles have the high activity because of the wide surface area. However, it is difficult to maintain the gold nanoparticles in a nonassembly form. As a method for preventing assembling of the gold nanoparticles, there are a method for using a surfactant, a method for using a thiol anchoring group, and a method for using a mercaptoammonium ligand.

The halloysite is a nano-sized plate type, and has a structure in which different layers are alternatively layered in a ratio of 1:1. In addition, it is present in a natural state in aluminosilicate. The outside surface of the halloysite includes a silicate layer, and the silicate layer mostly includes anions of the pH of 2 or more. In addition, the alumina layer is provided from the silicate layer to the inside thereof.

It is widely known that the clay material can act as a catalyst for converting hydrocarbons. Currently, efforts have been made to perform sustained drug delivery and synthesize the polymers/clay nanocompound. Until now, it is reported that among the metal nanoparticles, only lead (Pb) and nickel (Ni) nanoparticles related to the halloysite nanotube. That is, it is known that only lead (Pb) and nickel (Ni) nanoparticles can be formed on the halloysite nanotube. In the case of the lead, it is formed on the halloysite nanotube by using methanol as the solvent and the reducing agent, and nickel is formed on the halloysite nanotube by using the electroless plating method. In addition, the nickel nanoparticles may be formed on the surface thereof by only activating the surface of the halloysite.

As described above, recently, efforts in which the lead or nickel nanoparticles are plated on the halloysite nanotube have been made.

In the case of when the lead nanoparticles are plated, a nonaqueous system that includes methanol is used as a solvent and a non-green system reducing agent. On the other hand, in the case of when the nickel nanoparticles are plated, the electroless plating method is used, the nickel nanoparticles can be plated by only activating the surface of the halloysite.

In addition, in the case of when the method in which the nickel nanoparticle or the lead nanoparticle is formed is used, there is a problem in that the size of the nanoparticle is large, so that it is difficult to ensure the wide surface area thereof.

Formerly, the present inventor has disclosed a technology for synthesizing the gold nanoparticle on the surface of the carbon nanotube [Hole-Doped Single-Walled Carbon Nanotubes: Ornamenting with Gold Nanoparticles in Water, Kim DS, Lee T, Geckeler KE , Angew. Chem. 2005,118,110-113; Angew. Chem. Int. Ed. 2006, 45, 104-107.]. However, the disclosed above technology uses the different approach method and mechanism from the technical spirit that is realized in the present invention.

In particular, as the technology in related art, in the case of when the nanoparticle that includes nickel or lead is formed, there is a disadvantage in that it is difficult to realize the wide surface area through the formed nanoparticles.

In addition, without the separate treatment in respects to the surface of the nanotube, a technology for directly forming the gold nanoparticles on the nanotube is not present.

### Disclosure of the Invention

The present invention has been made keeping in mind the above problems occurring in the related arts, a primary object of the present invention is to provide a halloysite nanotube in which a gold nanoparticle is formed by directly performing an access on a solution.

In addition, a secondary object of the present invention is to provide a method for forming a gold nanoparticle on a halloysite nanotube.

In order to accomplish the primary object, the present invention provides a gold nanoparticle-halloysite nanotube that comprises a halloysite nanotube that includes an alumina layer, a space, and a silicate layer; and a gold nanoparticle that is formed by reducing a gold ion introduced on the surface of the halloysite nanotube by a gold salt by using a reducing agent.

In order to accomplish the secondary object, the present invention provides a method for forming a gold nanoparticle-halloysite nanotube, which comprises the steps of preparing a suspension solution of the halloysite nanotube by adding water; forming a gold ion on the surface of the halloysite nanotube by adding the gold salt to the suspension solution; and forming the gold nanoparticle by reducing the gold ion using the reducing agent.

As described above, without the surface reformation of the protective agent or the halloysite nanotube, the gold nanoparticles are directly synthesized on the halloysite nanotube. The average diameter of each of the gold nanoparticles that are densely distributed by the synthesis is about 4 nm, and this shows that the wide surface area can be obtained through the gold nanoparticles. In addition, the nanohybrid that is formed by the above process is characterized in that it is dispersed in water. The utility of the characteristics of the nanohybrid on which the gold nanoparticles are formed may be high in catalyst or biomedical fields.

### BRIEF DESCRIPTION OF THE DRAWINGS

Figs. 1A and 1B are an image and a perspective view that illustrate a halloysite nanotube that has a layered structure according to a preferable embodiment of the present invention;
Fig. 2 is a perspective view that illustrates a process for forming the gold nanoparticle on the surface of the halloysite nanotube on the aqueous solution according to a preferable embodiment of the present invention;
Figs. 3A and 3B are images that illustrate a halloysite nanotube in which a halloysite nanotube and a gold nanoparticle are formed according to a preferable embodiment of the present invention;
Figs. 4A and 4B are XRD spectrums in respects to a halloysite nanotube and a gold nanoparticle-halloysite nanotube according to a preferable embodiment of the present invention; and
Fig. 5 is an EDX spectrum in respects to a gold nanoparticle-halloysite nanotube in the case of when the content of gold is 1.1 % by weight, the content of silicon is 24.78 % by weight and the content of aluminium is 19.27 % by weight according to a preferable embodiment of the present invention.

### Best Mode for Carrying Out the Invention

In the present invention, the insertion of the protecting agent or the anchoring agent is excluded, and the synthesis is directly carried out on the solution. Through this, the gold nanoparticles are formed on the surface of the halloysite nanotube. The separate treatment such as the surface reformation, the activation and the like in respects to the halloysite nanotube is not carried out. The nanohybrid that is the resulting substance is characterized in that it is capable of being presented in a dispersion state for 30 hours in water.

Hereinafter, preferable embodiments according to the present invention will be described in detail with reference to the accompanying drawings. It should be noted that the following embodiments are set forth to illustrate the present invention, but are not to be construed to limit the scope of the present invention.

### Embodiments

First, by using a sieve that has the 125 um size meshes, the halloysite is filtered. In respects to the obtained halloysite nanotube, the suspension solution is formed, and the gold ion is formed on the surface of the halloysite nanotube by adding the gold salt thereto. Subsequently, by using the reducing agent, the gold nanoparticle is formed on the surface of the halloysite nanotube. This will be described in more detail.

To 30 mg of the halloysite nanotube that is obtained through the meshes, 3 mg of water is added, and agitated for 1 hour. Through the agitation, the suspension solution is formed.

Subsequently, 10 mg of HAuCl₄ that is the gold salt is added to the suspension solution, and they are agitated until HAuCl₄ is completely dissolved. The mixture in which HAuCl₄ is dissolved is softly agitated every 1 hour, and is maintained at normal temperature for about 5 hours in a vacuum state of 1 × 10⁻⁵ Pa.

Through this, the gold ions are attached to the surface of the halloysite nanotube.

Continuously, the solution that is mixed with 10 ml of NaBH₄ that is the reducing agent in the concentration of 26 mM is added to the mixture that is mixed with HAuCl₄. Through the agitation and the centrifugal separation for several terms, the clean supernatant is separated. 2500 g of the gold nanoparticle-halloysite nanohybrid that is obtained by the centrifugal separation for 30 min is dried for 36 hours at a temperature of 45°C in the vacuum oven.

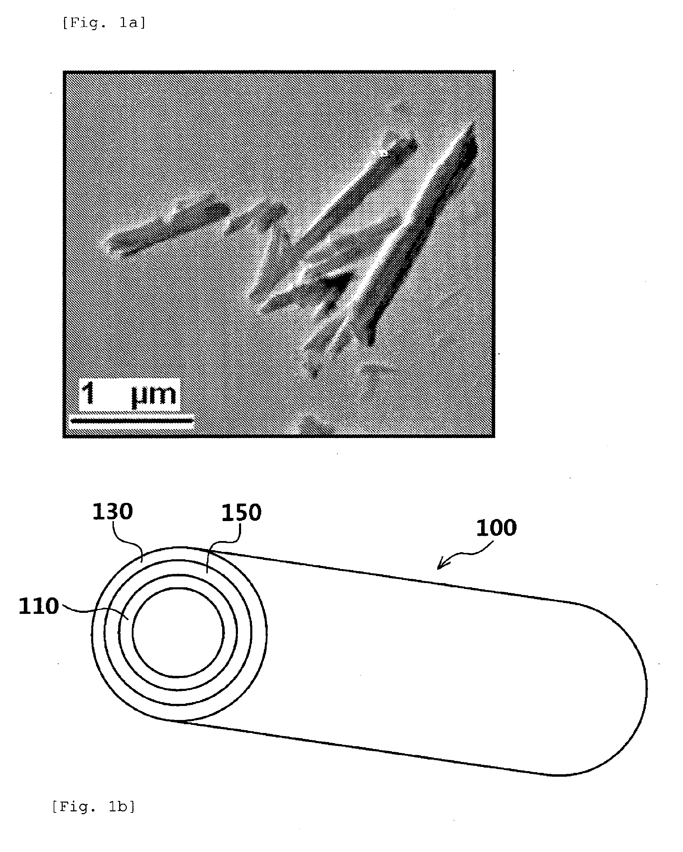

Figs. 1A and 1B are an image and a perspective view that illustrate a halloysite nanotube that has a layered structure according to a preferable embodiment of the present invention.

With reference to FIGS. 1A and 1B, after the purification through the meshes, the halloysite nanotube 100 that has various lengths and diameters is provided. In particular, the halloysite nanotube 100 has a structure in which an alumina layer 110 and a silicate layer 130 are layered in a ratio of 1:1. The outside of the halloysite nanotube 100 consists of a silicate layer 130, and the long cylindrical inside thereof consists of an alumina layer 110. In addition, between the alumina layer 110 and the silicate layer 130, a space 150 is formed. In the case of when the halloysite nanotube 100 is hydrated to provide moisture to the space 150, the interval of the space 150 between the silicate layer 130 and the alumina layer 110 is 1 nm. In addition, in the case of when the halloysite nanotube 100 is dehydrated, the interval of the space 150 is 0.75 nm.

In addition, the halloysite nanotube 100 may be formed in a form that the alumina layer 110, the space 150 and the silicate layer 150 are repeated from the inside thereof.

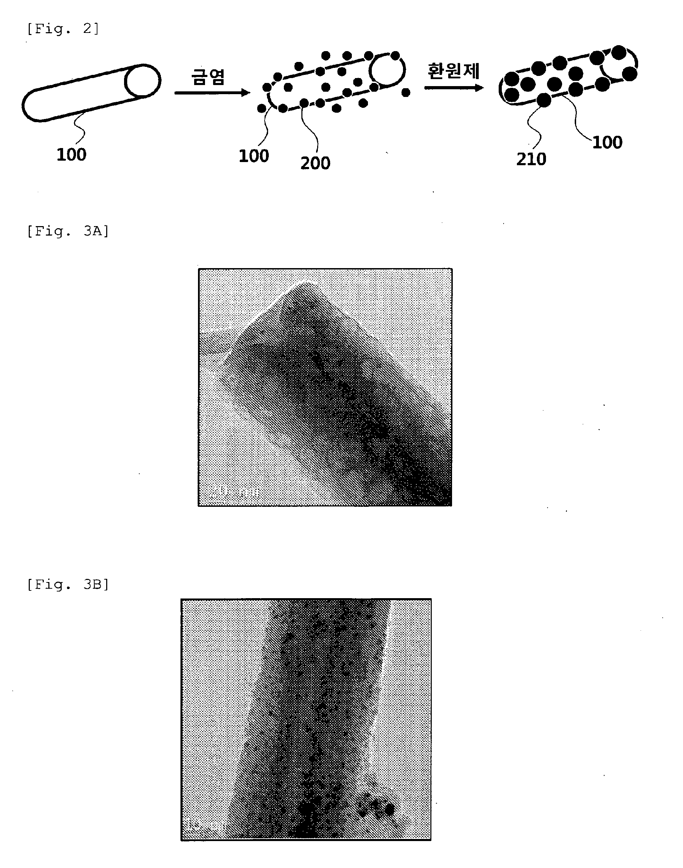

Fig. 2 is a perspective view that illustrates a process for forming the gold nanoparticle on the surface of the halloysite nanotube on the aqueous solution according to a preferable embodiment of the present invention;

With reference to FIG. 2, first, the gold salt is added to the obtained halloysite nanotube 100. As the gold salt, hydrogen tetrachloroaurate (III) (HAuCl₄·nH₂O), potassium tetrachloroaurate (II) (KAuCl₄), sodium tetrachloroaurate (III) dihydrate (NaAuCl₄·2H₂O) , gold (III) bromide hydrate (AuBr₃·nH₂O), gold (III) chloride (AuCl₃), gold (III) chloride hydrate (AuCl₃·nH₂O), gold (**III**) chloride trihydrate (AuCl₃·3H₂O) and the like are used. In particular, in the present embodiment, as the gold salt, HAuCl₄ is used. In addition to this, the above various gold salts may be used. If the gold salt is added thereto, the gold ions 200 are attached to the surface of the halloysite nanotube 100. The attachment of the gold ion 200 is progressed in a form where the gold ions 200 are filled in the groove formed on the surface of the halloysite nanotube 100 that has the cylindrical shape.

Continuously, if the reducing agent is added to the halloysite nanotube 100 to which the gold ion 200 is attached, the gold ions 200 are reduced and converted into the gold nanoparticles 210. As the reducing agent, sodium borohydride (NaBH₄), aluminium borohydride (AlBH4), sodium triacetoxyborohydride (Na(CH₃CO₂)3BH), sodium cyanoborohydride (NaBH₃CN), oxalic acid (C₂H₂O₄), sodium oxalate (Na₂C₂O₄), potassium oxalate (K₂C₂O₄), formaldehyde (HCHO), hydrazine (N₂H₄), or hydroquinone (C₆H₄(OH)₂) is used, and in the present embodiment, NaBH4 is used. In addition to this, the above various reducing agents may be used. Through the above process, the gold nanoparticle-halloysite nanotube, on the surface of which the gold nanoparticles 210 are formed can be obtained.

Figs. 3A and 3B are images that illustrate a halloysite nanotube in which a halloysite nanotube and a gold nanoparticle are formed according to a preferable embodiment of the present invention.

With reference to FIG. 3A, it can be seen that on the surface of the halloysite nanotube, a plurality of grooves are formed thereon.

In addition, with reference to FIG. 3B, it can be seen that the gold nanoparticles are densely distributed on the surface of the halloysite nanotube. If the statistic analysis in respects to the 200 gold nanoparticles is carried out, it can be seen that the diameter of the gold nanoparticle is in the range of about 4 nm ± 1 nm. This is the smaller diameter than the nanoparticle that is mentioned in the related art and consists of lead or nickel. In addition, it is examined that the number of the gold nanoparticles is 82 in the area of 10,000 nm². For example, in the case of the halloysite nanotube in which the average length is 600 nm and the diameter is 100 nm, about 1500 ± 50 gold nanoparticles are distributed on the whole surface thereof.

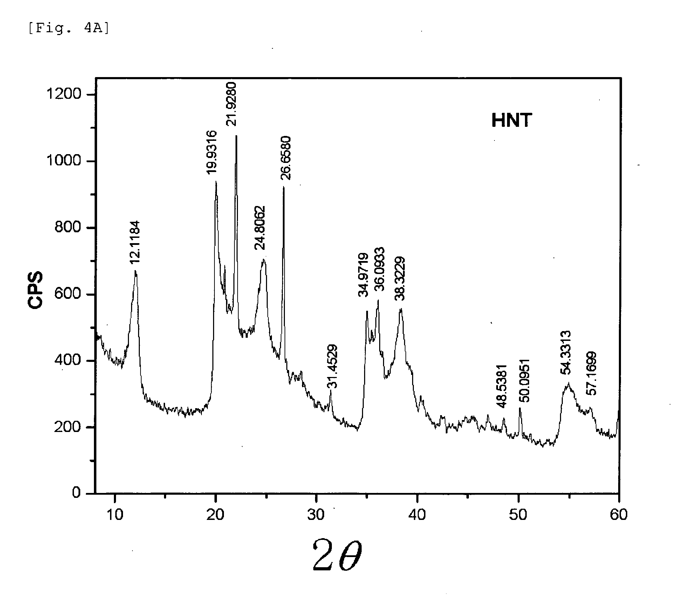

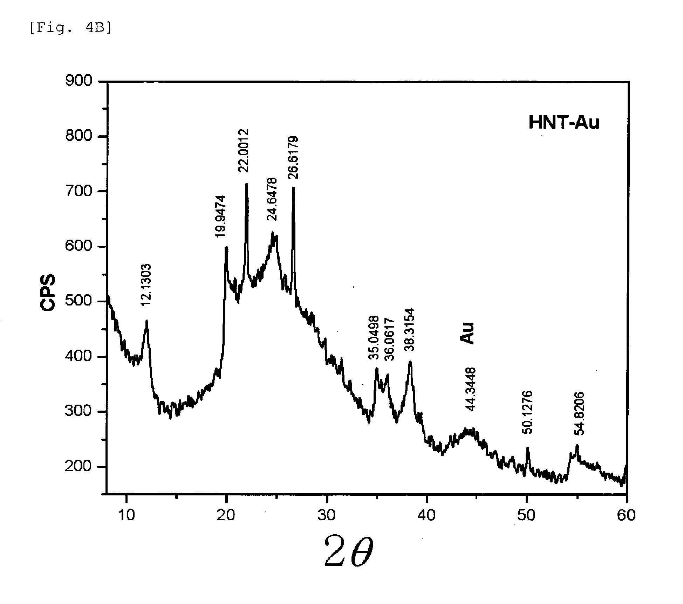

Figs. 4A and 4B are XRD spectrums in respects to a halloysite nanotube and a gold nanoparticle-halloysite nanotube according to a preferable embodiment of the present invention.

First, with reference to FIG. 4A, the basic d-spacing value in respects to the pure halloysite nanotube is 0.73 nm. This means the distance of the space between the silicate layer and the alumina layer that form the halloysite nanotube, and a novel material is not interposed into the space.

Continuously, with reference to FIG. 4B, the gold shows the diffraction peak over the wide range, which is shown at 2θ = 44.34. The diffraction peak that is shown over the wide range means that each of the gold nanoparticles has the amorphous structure. In addition, in the case of when an organic solvent such as DMSO (dimethyl sulfoxide) or a large organic molecule such as n-hexylamine is interposed into the space between the silicate layer and the alumina layer that form the halloysite nanotube, the d-spacing value is increased by the expansion of the layered structure.

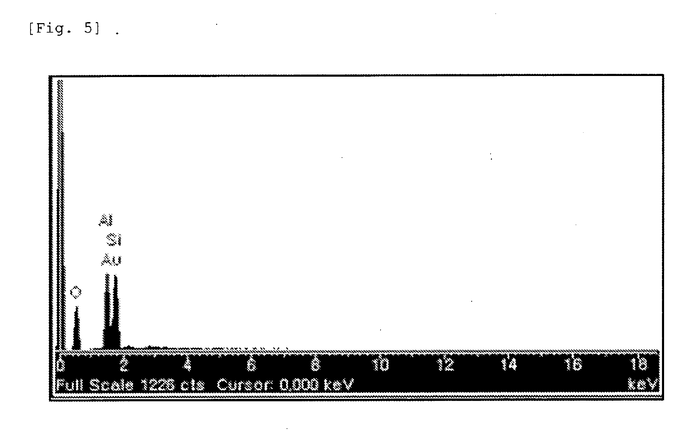

Fig. 5 is an EDX spectrum in respects to a gold nanoparticle-halloysite nanotube in the case of when the content of gold is 1.1 % by weight, the content of silicon is 24.78 % by weight and the content of aluminium is 19.27 % by weight according to a preferable embodiment of the present invention.

With reference to FIG. 5, the EDX spectrum shows the presence of the gold. That is, it shows that the gold is present in the content of 1.1 % by weight, the silicon is present in the content of 24.78 % by weight, and aluminum is present in the content of 19.27 % by weight. These numerical values correspond to the composition of the halloysite nanotube in which the silicate layer and the alumina layer are layered in the ratio of 1:1 in a natural state.

As described above, by introducing the gold salt into the halloysite nanotube, the gold ion is formed on the surface of the halloysite nanotube. In addition, by adding the reducing agent thereto, the gold nanoparticle is formed by reducing the gold ion. That is, like the known technology, without the surface reformation of the protective agent or the halloysite nanotube, the gold nanoparticle-halloysite nanotube that has the very dense distribution can be formed.

The present invention has been described in an illustrative manner, and it is to be understood that the terminology used is intended to be in the nature of description rather than of limitation. Many modifications and variations of the present invention are possible in light of the above teachings. Therefore, it is to be understood to those skilled in the art that within the scope of the appended claims, the invention may be practiced otherwise than as specifically described.

## Claims

1. A gold nanoparticle-halloysite nanotube comprising:
a halloysite nanotube that includes an alumina layer, a space, and a silicate layer; and
a gold nanoparticle that is formed by reducing a gold ion introduced on the surface of the halloysite nanotube by a gold salt by using a reducing agent.

2. The gold nanoparticle-halloysite nanotube according to claim 1, wherein the gold salt is hydrogen tetrachloroaurate, potassium tetrachloroaurate, sodium tetrachloroaurate dihydrate, gold (III) bromide hydrate, gold (III) chloride, gold (III) chloride hydrate, or gold (III) chloride trihydrate.

3. The gold nanoparticle-halloysite nanotube according to claim 1, wherein the reducing agent is sodium borohydride, aluminium borohydride, sodium triacetoxyborohydride, sodium cyanoborohydride , oxalic acid , sodium oxalate, potassium oxalate, formaldehyde, hydrazine, or hydroquinone.

4. The gold nanoparticle-halloysite nanotube according to claim 1, wherein the diameter of the gold nanoparticle is 4 nm ± 1 nm.

5. A method for forming a gold nanoparticle-halloysite nanotube, the method comprising the steps of:
preparing a suspension solution of the halloysite nanotube by adding water;
forming a gold ion on the surface of the halloysite nanotube by adding the gold salt to the suspension solution; and
forming the gold nanoparticle by reducing the gold ion using the reducing agent.

6. The method for forming a gold nanoparticle-halloysite nanotube according to claim 5, wherein the forming of the gold ion is the addition of the gold salt to the halloysite nanotube, and the gold salt is hydrogen tetrachloroaurate, potassium tetrachloroaurate, sodium tetrachloroaurate dihydrate, gold (III) bromide hydrate, gold (III) chloride, gold (III) chloride hydrate, or gold (III) chloride trihydrate.

7. The method for forming a gold nanoparticle-halloysite nanotube according to claim 6, wherein the forming of the gold ion is progressed in a groove on the surface of the halloysite nanotube.

8. The method for forming a gold nanoparticle-halloysite nanotube according to claim 5, wherein the reducing agent is sodium borohydride, aluminium borohydride, sodium triacetoxyborohydride, sodium cyanoborohydride , oxalic acid , sodium oxalate, potassium oxalate, formaldehyde, hydrazine, or hydroquinone.

## Patentansprüche

1. Goldnanoteilchen-Halloysit-Nanoröhre umfassend:
eine Halloysit-Nanoröhre, die eine Aluminiumschicht, einen Abstand und eine Silicatschicht umfasst; und
ein Goldnanoteilchen, das durch Reduzieren eines Goldions, das auf die Oberfläche der Halloysit-Nanoröhre durch ein Goldsalz aufgebracht worden ist, unter Anwendung eines Reduktionsmittels gebildet wird.

2. Goldnanoteilchen-Halloysit-Nanoröhre nach Anspruch 1, wobei das Goldsalz Wasserstofftetrachloraurat, Kaliumtetrachloraurat, Natriumtetrachlorauratdihydrat, Gold(III)-bromidhydrat, Gold(III)-chlorid, Gold(III)-chloridhydrat oder Gold(III)-chloridtrihydrat ist.

3. Goldnanoteilchen-Halloysit-Nanoröhre nach Anspruch 1, wobei das Reduktionsmittel Natriumborhydrid, Aluminiumborhydrid, Natriumtriacetoxyborhydrid, Natriumcyanoborhydrid, Oxalsäure, Natriumoxalat, Kaliumoxalat, Formaldehyd, Hydrazin oder Hydrochinon ist.

4. Goldnanoteilchen-Halloysit-Nanoröhre nach Anspruch 1, wobei der Durchmesser der Goldnanoteilchen 4 nm ± 1 nm beträgt.

5. Verfahren zum Bilden einer Goldnanoteilchen-Halloysit-Nanoröhre, wobei das Verfahren folgende Schritte umfasst:
das Herstellen einer Suspensionslösung der Halloysit-Nanoröhre durch Hinzugeben von Wasser;
das Bilden eines Goldions auf der Oberfläche der Halloysit-Nanoröhre durch Hinzugeben des Goldsalzes zu der Suspensionslösung;
und
das Bilden der Gold-Nanoteilchen durch Reduzieren des Goldions unter Anwendung des Reduktionsmittels.

6. Verfahren zum Bilden einer Goldnanoteilchen-Halloysit-Nanoröhre nach Anspruch 5, wobei das Bilden des Goldions aus dem Hinzugeben des Goldsalzes zu der Halloysit-Nanoröhre besteht und das Goldsalz Wasserstofftetrachloraurat, Kaliumtetrachloraurat, Natriumtetrachlorauratdihydrat, Gold(III)-bromidhydrat, Gold(III)-chlorid, Gold(III)-chloridhydrat oder Gold(III)-chloridtrihydrat ist.

7. Verfahren zum Bilden einer Goldnanoteilchen-Halloysit-Nanoröhre nach Anspruch 6, wobei das Bilden des Goldions in einer Vertiefung auf der Oberfläche der Halloysit-Nanoröhre seinen Fortgang nimmt.

8. Verfahren zum Bilden einer Goldnanoteilchen-Halloysit-Nanoröhre nach Anspruch 5, wobei das Reduktionsmittel Natriumborhydrid, Aluminiumborhydrid, Natriumtriacetoxyborhydrid, Natriumcyanoborhydrid, Oxalsäure, Natriumoxalat, Kaliumoxalat, Formaldehyd, Hydrazin oder Hydrochinon ist.

## Revendications

1. Nanotube de nanoparticule d'or-halloysite qui comprend :
un nanotube d'halloysite qui comprend une couche d'alumine, un espace, et une couche de silicate ; et
une nanoparticule d'or qui est formée par réduction d'un ion or introduit sur la surface du nanotube d'halloysite par un sel d'or en utilisant un réducteur.

2. Nanotube de particule d'or-halloysite selon la revendication 1, le sel d'or étant le tétrachloroaurate d'hydrogène, le tétrachloroaurate de potassium, le tétrachloroaurate de sodium dihydrate, le bromure d'or (III) hydrate, le chlorure d'or (III), le chlorure d'or (III) hydrate, ou le chlorure d'or (III) trihydrate.

3. Nanotube de nanoparticule d'or-halloysite selon la revendication 1, le réducteur étant le borohydrure de sodium, le borohydrure d'aluminium, le triacétoxyborohydrure de sodium, le cyanoborohydrure de sodium, l'acide oxalique, l'oxalate de sodium, l'oxalate de potassium, le formaldéhyde, l'hydrazine, ou l'hydroquinone.

4. Nanotube de particule d'or-halloysite selon la revendication 1, le diamètre de la nanoparticule d'or étant de 4 nm ± 1 nm.

5. Procédé de formation d'un nanotube de nanoparticules d'or-halloysite, le procédé comprenant les étapes consistant à :
préparer une solution en suspension du nanotube d'halloysite par addition d'eau ;
former un ion or sur la surface du nanotube d'halloysite par addition du sel d'or à la solution en suspension ; et
former la nanoparticule d'or par réduction de l'ion or à l'aide du réducteur.

6. Procédé de formation d'un nanotube de nanoparticule d'or-halloysite selon la revendication 5, la formation de l'ion or consistant en l'ajout du sel d'or au nanotube d'halloysite, et le sel d'or étant le tétrachloroaurate d'hydrogène, le tétrachloroaurate de potassium, le tétrachloroaurate de sodium dihydrate, le bromure d'or (III) hydrate, le chlorure d'or (III), le chlorure d'or (III) hydrate, ou le chlorure d'or (III) trihydrate.

7. Procédé de formation d'un nanotube de nanoparticule d'or-halloysite selon la revendication 6, la formation de l'ion or étant réalisée dans un sillon sur la surface du nanotube d'halloysite.

8. Procédé de formation d'un nanotube de nanoparticule d'or-halloysite selon la revendication 5, le réducteur étant le borohydrure de sodium, le borohydrure d'aluminium, le triacétoxyborohydrure de sodium, le cyanoborohydrure de sodium, l'acide oxalique, l'oxalate de sodium, l'oxalate de potassium, le formaldéhyde, l'hydrazine, ou l'hydroquinone.
